# EUROPEAN PATENT APPLICATION

(11) **EP 2 450 582 A1**
(43) Date of publication of application: **09.05.2012**
(21) Application number: 10794112.2
(22) Date of filing: 28.06.2010
(51) Int. Cl.: F16B 21/04, F16B 5/06

(54) **CLIP AND CLIP DEVICE**

(30) Priority: 29.06.2009 JP 2009153462
(71) Applicant: NIFCO INC., Kanagawa-ken 244-8522 (JP)
(72) Inventor: OKI, Kenji, Yokohama-shi Kanagawa 244-8522 (JP)
(74) Representative: Gassner, Wolfgang
(86) International application number: PCT/JP2010/060990
(87) International publication number: WO 2011/001943

(57) **Abstract**

The invention is a clip for fastening together and electrically connecting a coated metal panel and a metal plate. The clip includes a head part, and an insertion part for non-circular through-holes formed on the metal panel and metal plate. The insertion part L includes an insertable orientation and a non-insertable orientation into the through-holes, and includes an inclined side part for slide-contacting with a hole edge or hole wall of the through-hole of the metal panel by a twist operation after insertion into the through-hole, and sandwiching the metal panel and metal plate together with the head part at a prescribed twist position.

## Description

### Technological Field

This invention relates to a clip and a clip device constituted with the same, which can be fastened by a twist operation after inserting an insertion part into a through-hole, and can ensure an electrical connection between the fastened objects.

### BACKGROUND TECHNOLOGY

There may be a case when one wants to fix a metal plate to a coated metal panel while ensuring an electrical connection for grounding. Special consideration becomes necessary in such case. For example, in the case when directly or indirectly connecting to an automobile body panel, a ground electrode for an electrical device, or the like, mounted thereon, typically, a nut is welded to the body panel, and the metal plate to become the side of such ground electrode is connected to the body panel by fastening a bolt into this nut. However, it is difficult to ensure the electrical connection of the ground electrode to the body panel by simply performing such bolt fastening, because coating material adheres also inside the nut during coating of the body panel. From such viewpoint, Patent Document 1 is made such that the coating film of the coating material adhering inside the nut is peeled off by a deformed screw in which the constitution of the thread is changed from that of a general screw.

### PRIOR ART DOCUMENTS

### Patent Documents

Patent Document 1: Japanese Unexamined Patent Publication No. 2002-235717

### OUTLINE OF THE INVENTION

### PROBLEMS TO BE SOLVED BY THE INVENTION

A main problem to be solved by this invention is to be able to easily and adequately ensure an electrical connection between two plate members in a place of fastening, even in the case when either or both of these are coated, in a technique for fastening together the two plates without depending on bolt fastening.

### MEANS FOR SOLVING THE PROBLEMS

From a first viewpoint in this invention, in order to solve the aforementioned problem, a clip is made as a clip for fastening together and electrically connecting a coated metal panel and a metal plate, or a coated metal panel and a coated metal plate, comprising:
a head part, and an insertion part for non-circular through-holes formed on the aforementioned metal panel and metal plate;
wherein the insertion part has an orientation capable of insertion and an orientation incapable of insertion into the aforementioned through-holes; and includes
an inclined side part slide-contacting with a hole edge or hole wall of the aforementioned through-hole through a twist operation after insertion into the aforementioned through-hole, and sandwiching the metal panel and metal plate together with the head part at a prescribed twist position.

With such clip, the metal panel and metal plate can be fastened together in a state in which the two are closely affixed by the inclined side part slide-contacting with the hole edge or hole wall of such through-hole, by the twist operation after inserting the insertion part into the non-circular through-holes formed on the metal panel and metal plate. Also, a coating film of coating material in the place of contact with such inclined side part on the hole edge or hole wall of the through-hole can be scraped off by the inclined side part, and the metal panel and the clip can be electrically connected through this place. The metal panel and metal plate can thereby be connected also electrically by the fastening of the two through the clip.

An elastic piece, for contacting with one face of either one of the metal panel and metal plate and elastically deforming when the metal panel and metal plate are fastened together, may be provided on the head part. In such case, the metal panel and metal plate can be fastened together, with the inclined side part, to be described, being pushed against the hole edge or hole wall of the through-hole by operation of the elastic piece after the twist operation. Also, a coating film from coating can be scraped off at the place surrounding the through-hole by the elastic piece, and the metal panel and metal plate can be electrically connected by the clip through this place.

The inclined side part may be constituted so as to point contact the hole edge or hole wall of the through-hole of the metal panel. In such case, a coating film of coating material can be more assuredly scraped off from the metal panel in the place of sliding contact by the twist operation.

Also, from a second viewpoint in this invention in order to solve the aforementioned problem, a clip is made as a clip for fastening together and electrically connecting a coated metal panel and a metal plate or a coated metal panel and a coated metal plate, comprises:
a head part, and an insertion part for non-circular through-holes formed on the aforementioned metal panel and metal plate;
wherein the insertion part has an orientation capable of insertion and an orientation incapable of insertion into the aforementioned through-holes; and includes
a press-contact side part by slide-contacting with a hole edge or hole wall of the aforementioned through-hole by a twist operation after insertion into the aforementioned through-hole, and being pressed in contact with the hole edge or hole wall of the through-hole at a prescribed twist position.

With such clip, the metal panel and metal plate can be fastened together by the clip by the twist operation after inserting the insertion part into the non-circular through-holes formed on the metal panel and metal plate. In addition, the press-contact side part is slid against the hole edge or hole wall of the through-hole by a twist operation after insertion into the through-hole, so that a coating film inside the through-hole can be scraped off by the press-contact side part, and the metal panel and metal plate can be electrically connected by the clip through the place of press-contact. The metal panel and metal plate can thereby be connected also electrically by the fastening of the two through the clip.

The clip according to the aforementioned first viewpoint may be made as one comprising: a clip body made with synthetic resin, including a head part-constituting portion constituting the head part, and a shaft portion constituting the insertion part; and
a metal piece constituting the aforementioned insertion part, having a lower end part of the piece supported on a tip side of the shaft portion of the clip body, and an upper end part of the piece supported on the head part of the clip body;
wherein the inclined side part is formed by an intermediate part of the metal piece.

Also, the clip according to the aforementioned second viewpoint may be made as one comprising: a clip body made with synthetic resin, including a head part-constituting portion constituting the head part, and a shaft portion constituting the insertion part; and
a metal piece constituting the aforementioned insertion part, having a lower end part of the piece supported on a tip side of the shaft portion of the clip body, and an upper end part of the piece supported on the head part of the clip body;
wherein the press-contact side part is formed by an intermediate part of the metal piece.

In such case, a coating film of coating material on the hole edges or hole walls of the through-holes of the metal panel and metal plate, in the place of contact with the inclined side part or press-contact side part on such metal piece, can be scraped off by the inclined side part or press-contact side part, and the metal panel and metal piece constituting the clip can be electrically connected through this place. The metal panel and metal plate can thereby be connected also electrically by the fastening of the two through the clip. Particularly in the case when the clip is thus constituted, there is an advantage that a conductive metal constituting the clip can be limited to the metal piece, contributing to weight reduction and reduction of supply cost of the clip. In this case, if an elongated piece, for contacting with one face of either one of the metal panel and metal plate and elastically deforming when the metal panel and metal plate are fastened together, is further provided on the upper end part of the metal piece, then a coating film from coating can be scraped off at the place surrounding the through-hole by the elongated part in the process of the twist operation, and the metal panel and metal plate can be electrically connected by the clip through this place.

Also, from a third viewpoint in this invention in order to solve the aforementioned problem, the clip device is made as one comprising: the clip described above; and a grommet body, including a head part, and a fitting part to be fitted non-rotatably in the non-circular through-holes formed on the metal panel and metal plate;
wherein the clip is combined with the grommet body, receiving the insertion part on the inside of the fitting part of the grommet body in a manner so that the head part of the clip is overlaid on the head part of the grommet body;
an open part is formed on the fitting part of the grommet body to face outward the inclined side part or press-contact side part of the clip in the prescribed twist position of the clip; and
a latch-receiving part is formed on the head part of the grommet body to be latched with a latch part formed on the head part of the clip in the prescribed twist position.

With such clip device, the state in which the clip is in the prescribed twist position can be maintained stably by the grommet body.

### EFFECT OF THE INVENTION

With the clip and clip device according to this invention, a metal panel and a metal plate can be fastened together, and an electrical connection between the two can be ensured at the same time, by a twist operation after inserting the insertion part into the aligned through-holes provided on the metal panel and on the metal plate.

### BRIEF DESCRIPTION OF THE DRAWINGS

FIG. 1 is a perspective view of a clip in a state in which a metal panel and a metal plate are fastened together.
FIG. 2 is a perspective view illustrating the state in which the metal panel and the metal plate are fastened together, viewed from the side opposite that in FIG. 1.
FIG. 3 is a cross-sectional structural diagram of the state in FIG. 1.
FIG. 4 is a cross-sectional structural diagram illustrating in section the state in FIG. 1 at a position 90 degrees different from FIG. 3.
FIG. 5 is a perspective view illustrating the clip viewed from the side of the insertion part.
FIG. 6 is a bottom view illustrating the clip immediately after inserting the insertion part into the through-hole, viewed from the side of the insertion part.
FIG. 7 is a bottom view illustrating the state at completion of fastening, in which the clip was twisted up to a prescribed twist position from the state in FIG. 6, viewed from the side of the insertion part.
FIG. 8 is a side view of the clip.
FIG. 9 is a side view illustrating the clip viewed from a direction 90 degrees different from FIG. 8.
FIG. 10 is a plan view of the clip.
FIG. 11 is a bottom view of the clip.
FIG. 12 is a side view of a clip having changed a part of the constitution of the clip illustrated in FIGS. 1 to 11.
FIG. 13 is a side view illustrating the clip illustrated in FIG. 12, viewed from a direction 90 degrees different from FIG. 12.
FIG. 14 is a structural diagram of main parts in perspective view illustrating a clip having changed a part of the constitution of the clip illustrated in FIGS. 1 to 11, viewed from the side of the insertion part.
FIG. 15 is a structural diagram of main parts in perspective view illustrating the state at completion of fastening, in which the clip was twisted up to a prescribed twist position from the state in FIG. 14, viewed from the side of the insertion part.
FIG. 16 is a perspective view of an example in which a clip is constituted with a clip body and metal pieces (hereinafter referred to as "the second example" in this section).
FIG. 17 is a perspective view of the second example.
FIG. 18 is a side view of the second example.
FIG. 19 is a plan view of the second example.
FIG. 20 is an end view viewing the condition of the clip according to the second example in vertical section at the position of this section.
FIG. 21 is an exploded perspective view of the clip according to the second example and the grommet body combined therewith.
FIG. 22 is an exploded perspective view of the clip according to the second example and the grommet body combined therewith.
FIG. 23 is a perspective view of the clip according to the second example and the grommet body combined therewith.
FIG. 24 is a side view of the state in which the insertion part of the clip according to the second example combined with the grommet body is inserted into the through-holes of the overlaid metal panel and metal plate.
FIG. 25 is an end view in the state in which the insertion part of the clip according to the second example combined with the grommet body is inserted into the through-holes of the overlaid metal panel and metal plate, viewing the condition of cross-section in the horizontal direction from the cross-sectional position.
FIG. 26 is an end view illustrating the state immediately after starting the twist operation of the clip according to the second example from the state in FIG. 25.
FIG. 27 is an end view illustrating the state at the conclusion of the twist operation of the clip according to the second example.
FIG. 28 is a plan view of the clip according to the second example and the grommet in the state in FIG. 25.
FIG. 29 is a plan view illustrating the state at the conclusion of the twist operation of the clip according to the second example.

### EMBODIMENTS OF THE INVENTION

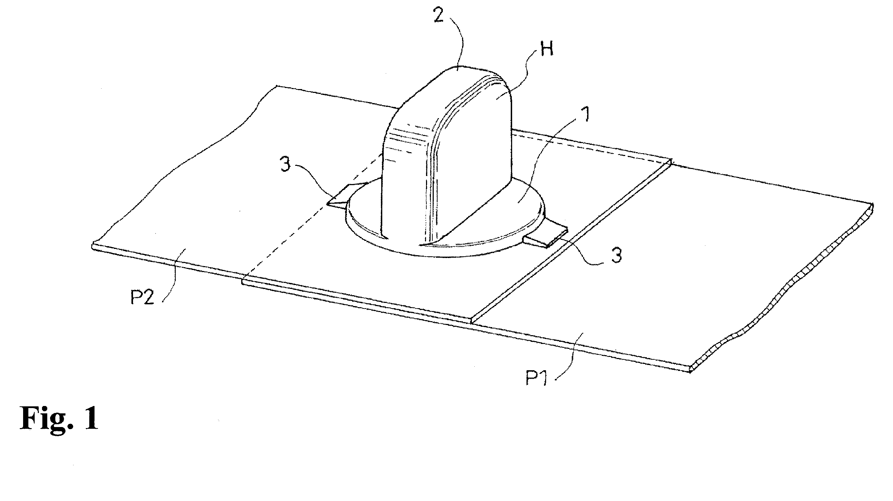

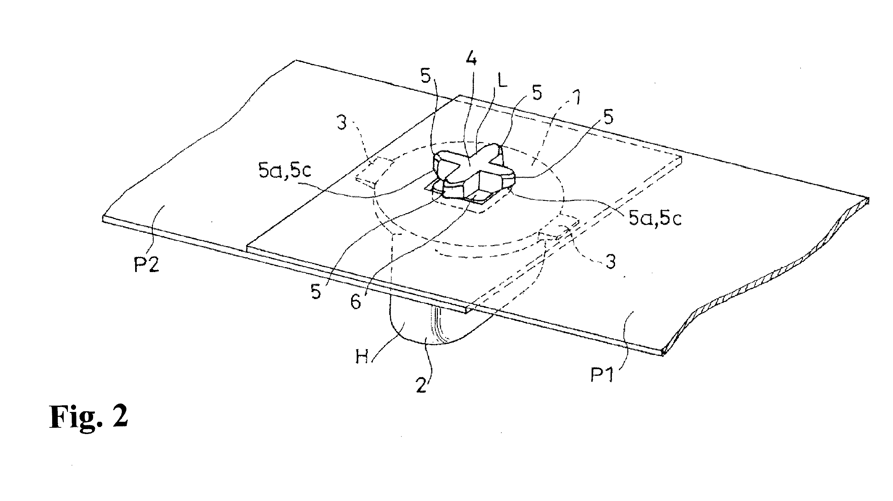

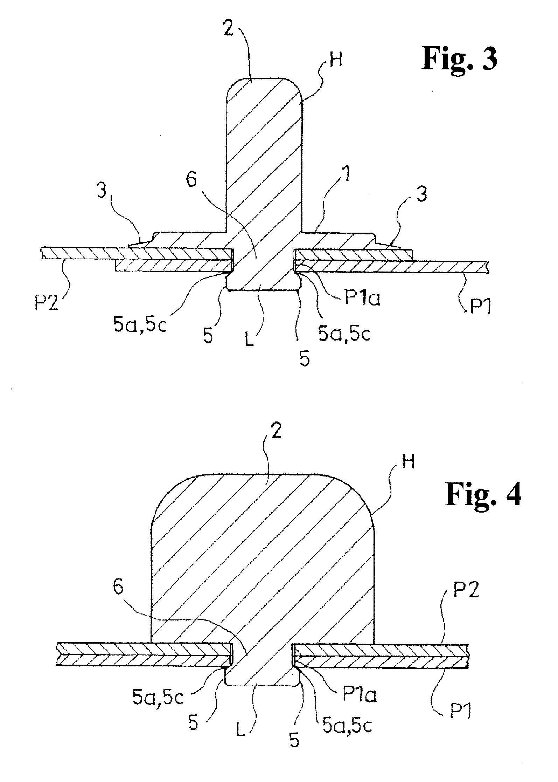

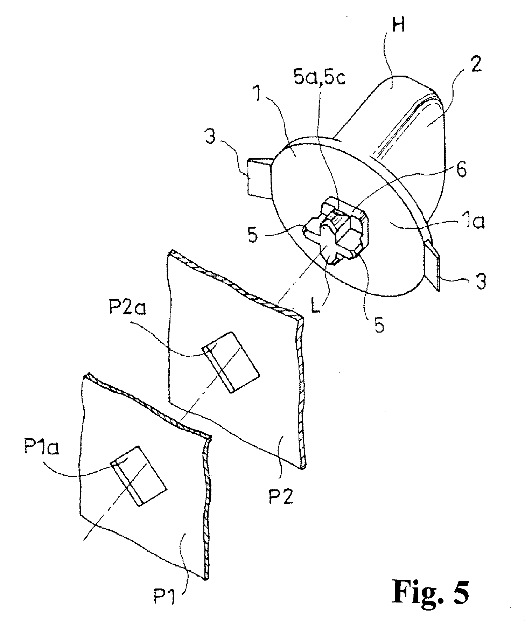

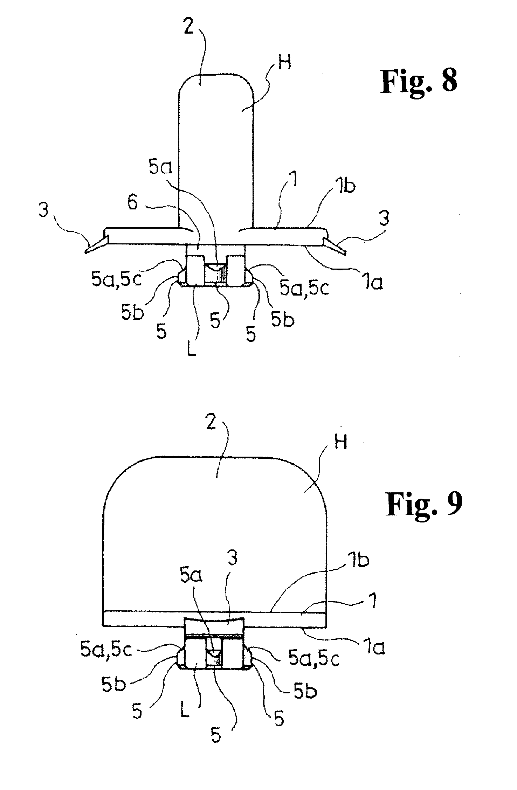

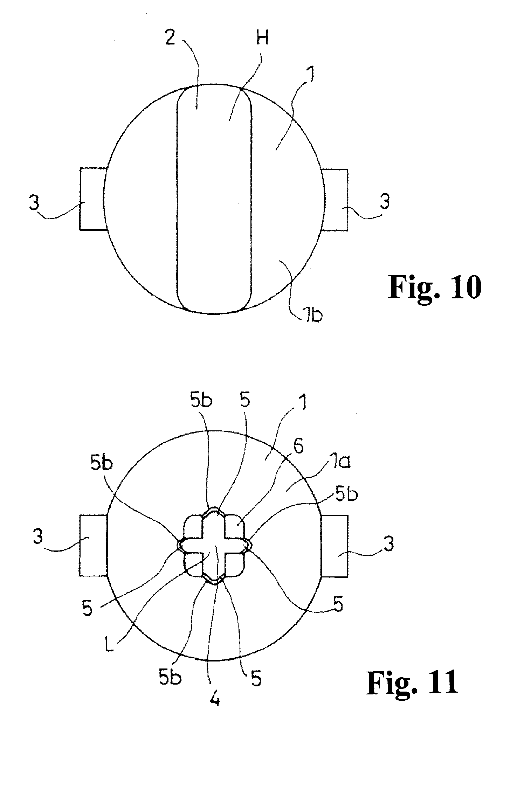

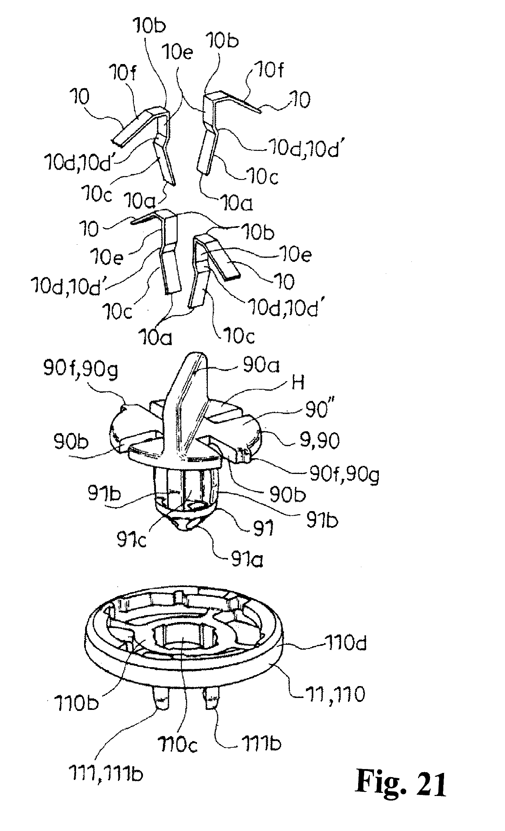

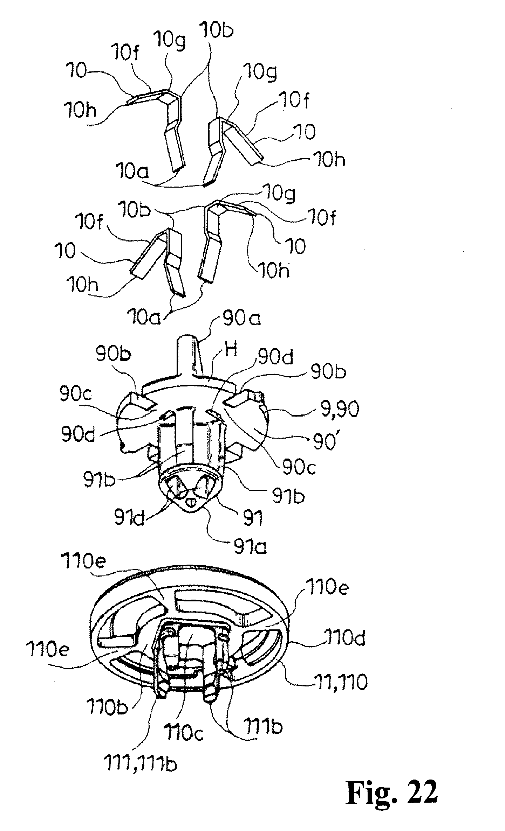

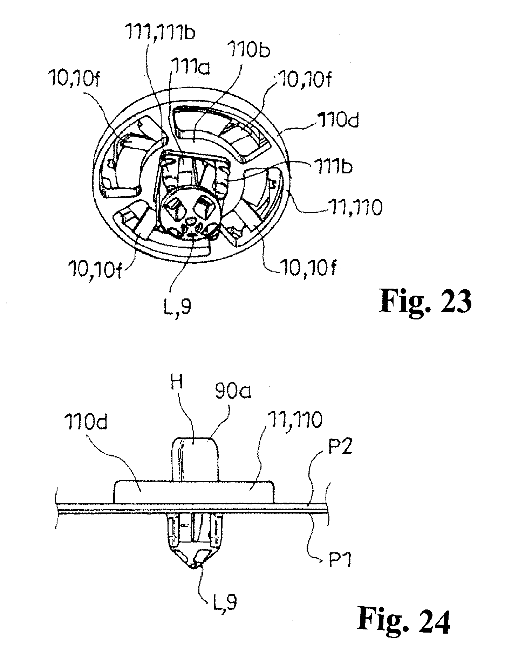

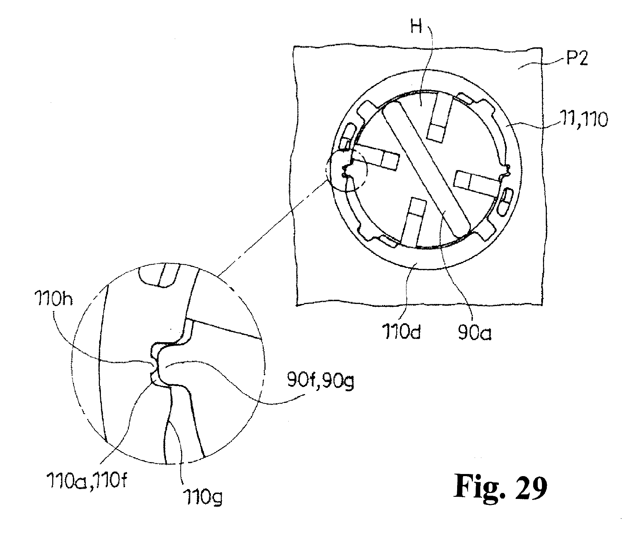

A typical embodiment of this invention is described below based on FIGS. 1 to 29. The clip according to this embodiment is used for fastening together and electrically connecting a metal plate P2 on a coated metal panel P1. Specifically, such clip includes an insertion part L inserted into through-holes P1a and P2a formed on such metal panel P1 and metal plate P2, and a head part H having a size that does not fit inside the through-holes P1a and P2a. Also, such metal panel P1 to metal plate P2 are fastened together by the clip by inserting the insertion part L into such through-holes P1a and P2a from a state having aligned the through-holes P1a and P2a, and then performing a twist operation. Also, such clip has a structure with which a coating film of coating material adhering to a hole edge or hole wall of the through-hole P1 of the metal panel P1 is scraped off in the process of such twist operation. The metal plate P2 and metal panel P1 can thereby be electrically connected by such clip.

Also, the clip according to this embodiment can be used also for fastening together and electrically connecting a coated metal plate P2 to a coated metal panel P1. In this case, such clip is constituted so that a coating film of coating material adhering to a hole edge or hole wall of a through-hole P1a of the metal panel P1 and a hole edge or hole wall of a through-hole P1a of the metal plate P2 can be scraped off in the process of the twist operation.

That is, such clip is constituted so that at least one part thereof, in other words, a place of contact with the metal panel P1 and metal plate P2 on such clip during the fastening is conductive.

Typically, the clip is constituted, making the entirety of the clip with metal, or making the entirety or a part of the insertion part L with metal and making the head part H with resin. In the case when ensuring an electrical connection through an elastic piece 3, as is to be described, a disk-form part 1 to be described also is made with metal.

With such clip, for example, the metal panel P2, being connected to a ground electrode for an electrical device, or the like, mounted on an automobile body panel as the metal plate P1, can be easily and adequately electrically connected to the body panel.

(Example illustrated in FIGS. 1 to 15)
In the example illustrated in FIGS. 1 to 15, the insertion part L is formed in about the center part of one face 1a of a disk-form part 1. Such insertion part L is integrally formed with the disk-form part 1, and projects from the one face 1a of the disk-form part 1. A grip part 2 is formed on the side of the other face 1b of the disk-form part 1. The grip part 2 assumes a square plate form having four sides having a diameter about equal to that of the disk-form part 1. The grip part 2 is formed on the other face 1b of the disk-form part 1 by integrally connecting one side part to the other face 1b of the disk-form part 1 so that this one side part follows a virtual straight line passing through the center of the disk-form part 1. Accordingly, the plate face of such grip part 2 is arranged in a direction orthogonal to the other face 1b of the disk-form part 1. In the illustrated example, the insertion part L is inserted into the through-holes P1a and P2a using this grip part 2, and the clip is twist-operated up to a prescribed twist position after this insertion. An elastic piece 3 is constituted so as to assume a tongue form projecting to the outside from an edge part of the disk-form part 1 on each of two sides surrounding the grip part 2. That is, in the illustrated example, such elastic piece 3 is provided on each of two sides in the diameter direction of the disk-form part 1. Also, such elastic piece 3, in the condition in side view, is projected diagonally from the edge part so as to move away from the one face 1a of the disk-form part 1 while approaching the projecting end thereof. Also, in the illustrated example, such elastic piece 3 contacts one face of the metal plate P2 and is elastically deformed during fastening of the metal panel P1 and metal plate P2 using the clip. In this embodiment, an inclined side part to be described is thereby pushed against the hole edges or hole walls of the through-holes P1a and P2a after the twist operation by the operation of this elastic piece 3, so that the metal panel P1 and metal plate P2 are fastened together without rattling. Also, a coating film from coating on a place around the through-hole P1a or through-hole P2a can be scraped off by this elastic piece 3, and the metal panel P1 and metal plate P2 can be electrically connected by the clip through this place.

Meanwhile, the insertion part L includes an insertable orientation and a non-insertable orientation into the non-circular through-holes P1a and P2a formed on the metal panel P1 and metal plate P2.

The insertion part L includes a core part 4 following the direction of insertion of this insertion part L, and wing parts 5 projected toward the sides from the sides of this core part 4. The core part 4 is formed in the center of the insertion part L, so that the clip is twisted with this core part 4 as the center of rotation during the twist operation. The wing parts 5 are projected from the sides of this core part 4 in radial directions centered on this core part 4. In the illustrated example, the insertion part L has four wing parts 5, 5, ....
The four wing parts 5, 5, ... are respectively formed on the sides of the core part 4 with about equal spacing between adjacent wing parts 5. That is, the wing parts 5 are formed at each about 90 degrees in the circumferential direction going around the core part 4, and the insertion part L is made as a cross form in sectional shape in a direction intersecting the direction of insertion, in the places of formation of the wing parts 5. In the illustrated example, each wing part 5 has a constant thickness in the circumferential direction going around the core part 4, and a lower edge face opposite to a catch-coupling face 5a to be described is positioned on the same plane as a lower edge face of the core part 4 (the face on the projecting end of the core part 4).

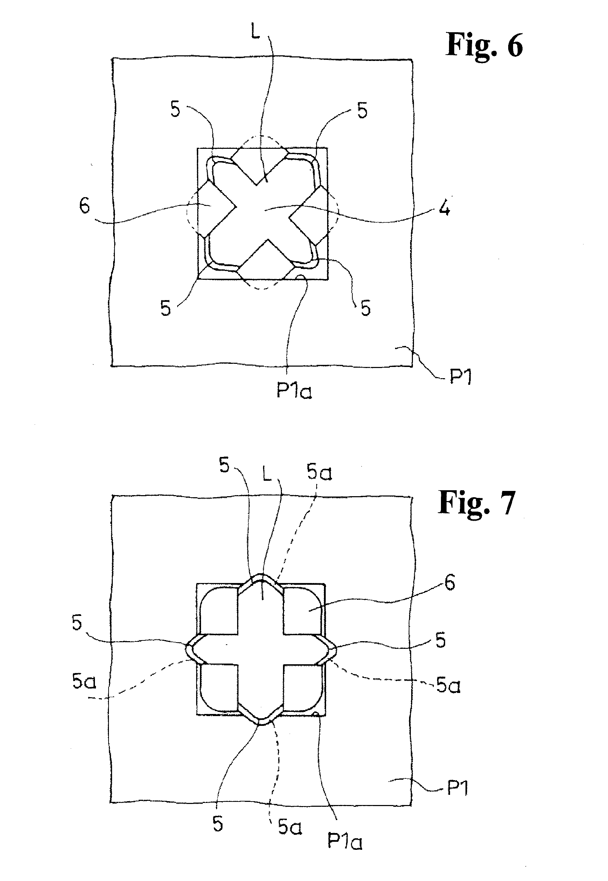

In this embodiment, the through-hole P1a of the metal panel P1 and the through-hole P2a of the metal plate P2 have about the same size and shape. Also, both through-holes P1a and P2a are formed so that the hole shape thereof, that is, the shape traced by the hole edge thereof is roughly square shaped. Also, in this embodiment, a space between projecting ends 5b of two wing parts 5 and 5 in back-to-back positions surrounding the core part 4 on the insertion part L of the clip is formed to be somewhat smaller than the length of a diagonal line of such through-holes P1a and P2a (FIG. 6), and is formed to be larger than the space between two opposite sides of such through-holes P1a and P2a. In this embodiment, the insertion part L of the clip is thereby insertable into the through-holes P1a and P2a only in an orientation in which the two wing parts 5 and 5 in back-to-back positions surrounding the core part 4 are arranged following the diagonal line of the through-holes P1a and P2a (FIG. 6). Also, a space in which the metal panel P1 and metal plate P2 can be sandwiched is formed between each wing part 5 and the head part H. Also, this embodiment is constituted so that by a twist operation of about 90 degrees from the state having inserted the insertion part L into the through-holes P1a and P2a, each wing part 5 catches on the sides of the through-holes P1a and P2a, the removal of the insertion part L from the through-holes P1a and P2a thereby becomes impossible, and the fastening of the metal panel P1 and metal plate P2 by the clip is accomplished (FIG. 7). That is, each wing part 5 respectively serves as a catch-coupling face 5a with places facing the side of the head part H on the sides of the through-holes P1a and P2a.

In this embodiment, the catch-coupling face 5a of such wing part 5 is inclined in a direction in which the thickness of the wing part 5 in the direction of insertion of the insertion part L gradually decreases while going toward the projecting end 5b of the wing part 5. In this embodiment, the catch-coupling face 5a is thereby slide contacting with the hole edge or hole wall of the through-hole P1a of the metal panel P1 during the twist operation of about 90 degrees after inserting the insertion part L into the through-holes P1a and P2a in the aforementioned manner, and the metal panel P1 and metal plate P2 are sandwiched between the catch-coupling face 5a and the head part H at a position at the conclusion of the twisting (the aforementioned prescribed twist position). That is, in this embodiment, an inclined side part 5c, for slide contacting with the hole edge or hole wall of the through-hole P1a of the metal panel P1 by a twist operation after insertion into the through-holes P1a and P2a, and sandwiching the metal panel P1 and metal plate P2 together with the head part H at a prescribed twist position, is formed on the insertion part L by the catch-coupling face 5a of such wing part 5.

In the illustrated example, a seat part 6 having a square outline roughly conforming to the hole shape of the through-holes P1a and P2a is formed on a base part of the insertion part L, and this seat part 6 fits into the through-holes P1a and P2a at the prescribed twist position (FIG. 7). That is, such seat part 6 functions as a rotation stopper.

With the clip according to this embodiment, the metal panel P1 and metal plate P2 can thereby be fastened together in a state in which the two are closely affixed by the inclined side part 5c being slid in contact with the hole edge or hole wall of the through-hole of the metal panel P1, by the twist operation after inserting the insertion part L into the non-circular through-holes P1a and P2a formed on the metal panel P1 and metal plate P2. Also, a coating film of coating material in the place of contact with such inclined side part 5c on the hole edge or hole wall of the through-hole P1a of the metal panel P1 can be scraped off by the inclined side part 5c, and the metal panel P1 and the clip can be electrically connected through this place. The metal panel P1 and metal plate P2 can thereby be connected also electrically by the fastening of the two through the clip.

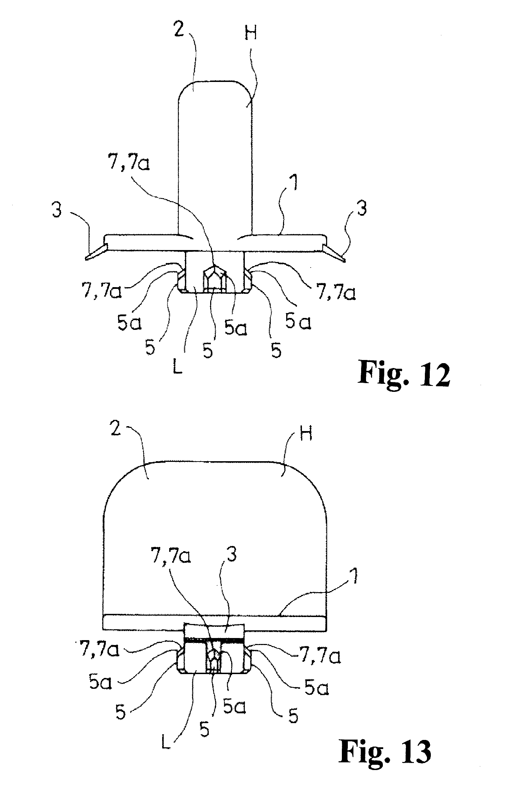

A peak-form part 7, having a top part facing the side of the head part H and continuing in the direction of projection of the wing part 5, may be formed on the side of the wing part 5 opposite the head part H, and a ridge line 7a thereof may be inclined in the aforementioned manner so that this ridge line 7a functions as the aforementioned inclined side part 5c, as illustrated in FIGS. 12 and 13. That is, the inclined side part 5c may be constituted so as to point contact the hole edge or hole wall of the through-hole P1a of the metal panel P1. In such case, a coating film of coating material can be more assuredly scraped off from the metal panel P1 in the place of sliding contact by the twist operation.

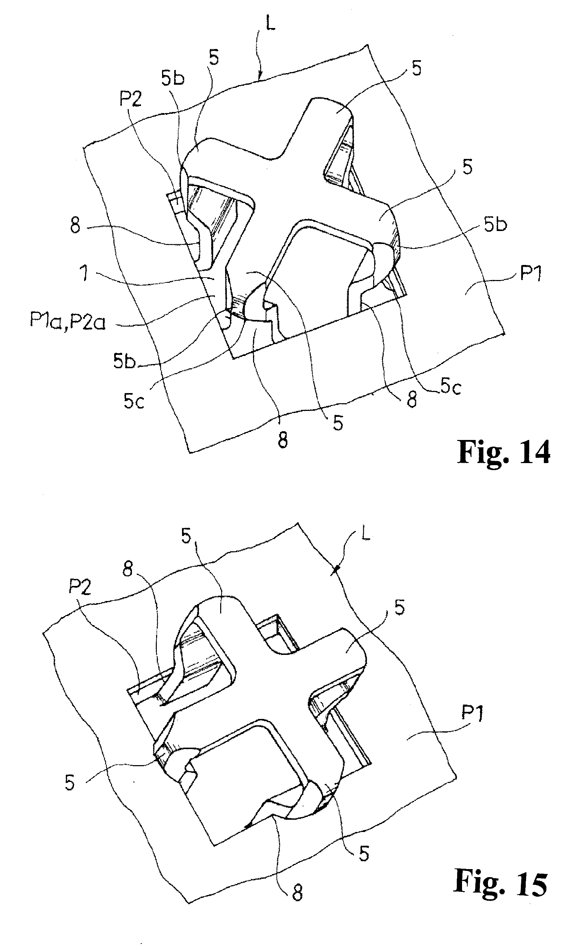

The insertion part may be constituted to be hollow, as illustrated in FIGS. 14 and 15. In FIGS. 14 and 15, the insertion part L is provided with a press-contact side part 8 following the direction of insertion of the insertion part L, directly above the inclined side part 5c of the wing part 5, in other words, between the inclined side part 5c and the disk-form part 1. Also, a space between projecting ends 5b of two wing parts 5 and 5 in back-to-back positions is formed to be somewhat smaller than the length of a diagonal line of the through-holes P1a and P2a, and is formed to be larger than the space between two opposite sides of such through-holes P1a and P2a. Furthermore, a space between press-contact side parts 8 directly above the inclined side parts 5c of the wing parts 5 and 5 in back-to-back positions is formed to be about equal to or larger than the space between two opposite sides of such through-holes P1a and P2a. In the example illustrated in FIG. 14 and 15, the press-contact side part 8 is thereby slid against the hole edges or hole walls of the through-holes P1a and P2a by a twist operation after insertion into the through-holes P1a and P2a, so that a coating film inside the through-holes P1a and P2a can be scraped off by the press-contact side part 8, and the metal panel P1 and metal plate P2 can be electrically connected by the clip through the place of press-contact. The metal panel P1 and metal plate P2 can thereby be connected also electrically by the fastening of the two through the clip.

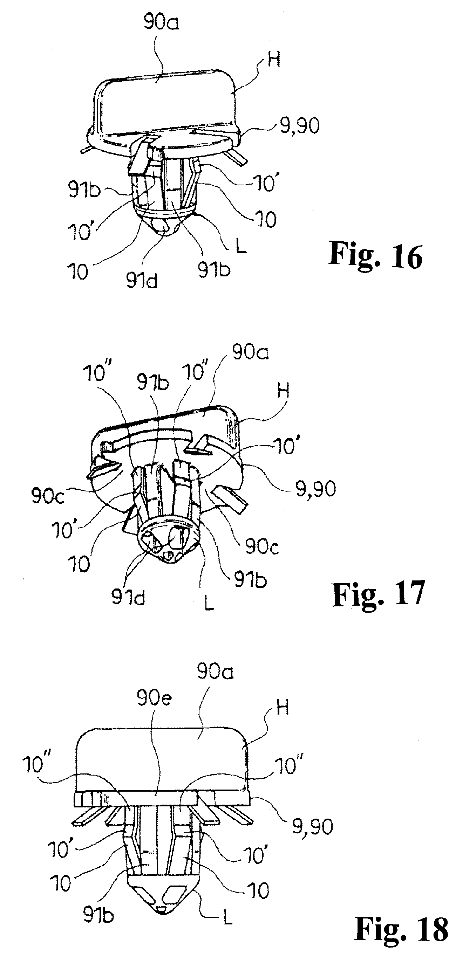

(Example illustrated in FIGS. 16 to 29)
In the example illustrated in FIGS. 16 to 29, the clip has a structure for electrically connecting a metal panel P1 and metal plate P2 respectively having through-holes P1a and P2a in which the shape traced by the hole edges is roughly square shaped, just as in the example illustrated in FIGS. 1 to 15.

In the example illustrated in FIGS. 16 to 29, the clip is constituted by combining a clip body 9 made with synthetic resin and metal pieces 10.

Also, in the example illustrated in FIGS. 16 to 29, the clip is combined with a grommet body 11 to be described, so as to constitute a clip device.

The clip body 9 includes a head part-constituting portion 90 constituting the head part H, and a shaft portion 91 constituting the insertion part L. The head part-constituting portion 90 is formed roughly a disc plate shape. The shaft portion 91 is integrally provided on one face 90' of the head part-constituting portion 90. A grip part 90a is formed on the other face 90" of the head part-constituting portion 90. In this example, such grip part 90a assumes a rectangular plate form having a long side about equal to the diameter of the head part-constituting portion 90. The grip part 90a is formed on the side of the other face 90" of the head part-constituting portion 90 by integrally connecting one long side part thereof to the other face 90" of the head part-constituting portion 90 so that the long side part follows a virtual straight line passing through the center of the head part-constituting portion 90. Accordingly, the plate face of such grip part 90a is arranged in a direction orthogonal to the other face 90" of the head part-constituting portion 90. In the illustrated example, the clip, having inserted the insertion part L into the through-holes P1a and P2a, is twist-operated up to a prescribed twist position using this grip part 90a.

Also, split grooves 90b, opened outward on an edge part 90e of the head part-constituting portion 90 and continuing toward the center, are provided in four places on the head part-constituting portion 90 with about equal spacing between adjacent split grooves 90b. The inside end of each split groove 90b is positioned in the vicinity of the grip part 90a. Also, a bridge part 90c spanning between left and right groove walls of each split groove 90b are formed on the inside end side of the split groove 90b so that an insertion gap 90d for the metal piece 10 is opened together with this inside end.

The shaft portion 91 includes a tip part 91a and a leg part 91b. One end of the leg part 91b is integrally connected to the tip part 91a, and the other end of the leg part 91b is integrally connected with the other end 90" of the head part-constituting portion 90.

The tip part 91a is constituted to have a conical form. The one end of the leg part 91b is integrally connected to the bottom face of the cone forming this tip part 91a.

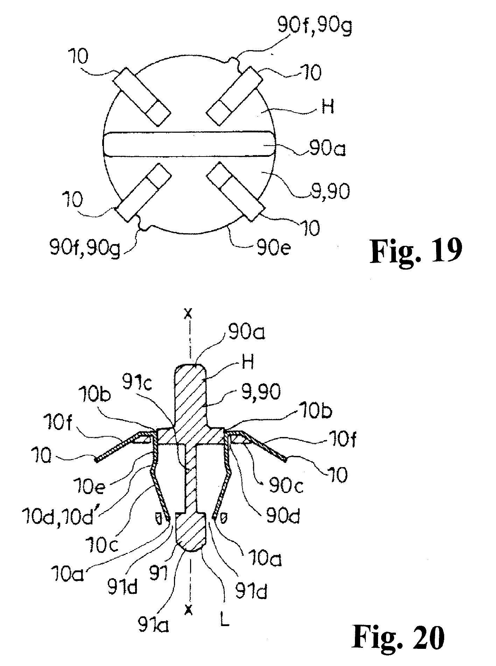

Leg parts 91b are provided in four places with about equal spacing between adjacent leg parts 91b in a direction going around a center line x connecting the center of the bottom face of the tip part 91a and the center of the head part-constituting portion 90 (see FIG. 20). Each leg part 91b is respectively arranged with about equal spacing from the center line x. Also, in the illustrated example, the leg parts 91b in two places in opposite positions surrounding the center line x, among the leg parts 91b in the four places, are connected together by a connecting plate part 91c. This connecting plate part 91c is provided spanning the entire length of the leg parts 91b, and this connecting plate part 91c also is integrated with the tip part 91a and the head part-constituting portion 90.

Through-holes 91d are formed in four places on the tip part 91a with about equal spacing between adjacent through-holes 91d in a direction going around the center of the bottom face of the tip part 91a. There is about equal spacing between each through-hole 91d and the center of the bottom face of the tip part 91a. Each through-hole 91d is provided spanning between the bottom face of the tip part 91a and the side face of the tip part 91a.

Each through-hole 91d is positioned directly below the corresponding split groove 90b of the head part-constituting portion 90, so that the split groove 90b and the through-hole 91d face the space between adjacent leg parts 91b.

A lower end part 10a of the metal piece 10 is supported on the tip side of the shaft portion 91 of the clip body 9, and an upper end part 10b is supported on the head part H of the clip body 9. In the illustrated example, the clip is constituted by combining four metal pieces 10, 10, ... on the clip body 9. Each metal piece 10 respectively has a long and slender strip form, and is combined on the clip body 9 so that one wide face is oriented toward the side of the center line x and the other wide face is oriented toward the outside.

Each metal piece 10 is respectively formed so that: (1) a portion from a lower end part 10a to an intermediate part 10d' becomes a first inclined part 10c, being inclined in a direction going away from the center line x while approaching the intermediate part 10d'; (2) the piece intermediate part 10d' becomes a second inclined part 10d, being inclined in a direction approaching the center line x while approaching an upper end part 10b; and (3) a portion between the intermediate part 10d' and the upper end part 10b becomes a vertical part 10e, being about parallel to the center line x. Also, each metal piece 10 includes an elongated part 10f extending from the upper end part 10b in a direction moving away from the center line x. The side of the elongated part 10f contacting with the upper end part 10b becomes a horizontal part 10g orthogonal to the center line x, and a portion forward from the horizontal part 10g becomes a third inclined part 10h, being inclined in a direction approaching the side of the lower end part 10a while going toward the tip of the elongated part 10f.

Each metal piece 10 is respectively arranged one by one between adjacent leg parts 91b on the clip body 9.
Specifically, each metal piece 10 is respectively inserted between the adjacent leg parts 91b from the insertion gap 90d with the lower end part 10a forward. The lower end part 10a is inserted into the through-hole 91d directly below the insertion gap 90d, and the intermediate part 10d' and vertical part 10e are positioned between the adjacent leg parts 91b. The horizontal part 10g of the elongated part 10f catches on the top of the bridge part 90c. The third inclined part 10h of the elongated part 10f is positioned through the split groove 90b with the tip thereof being downward from the one face 90' of the head part-constituting portion 90.

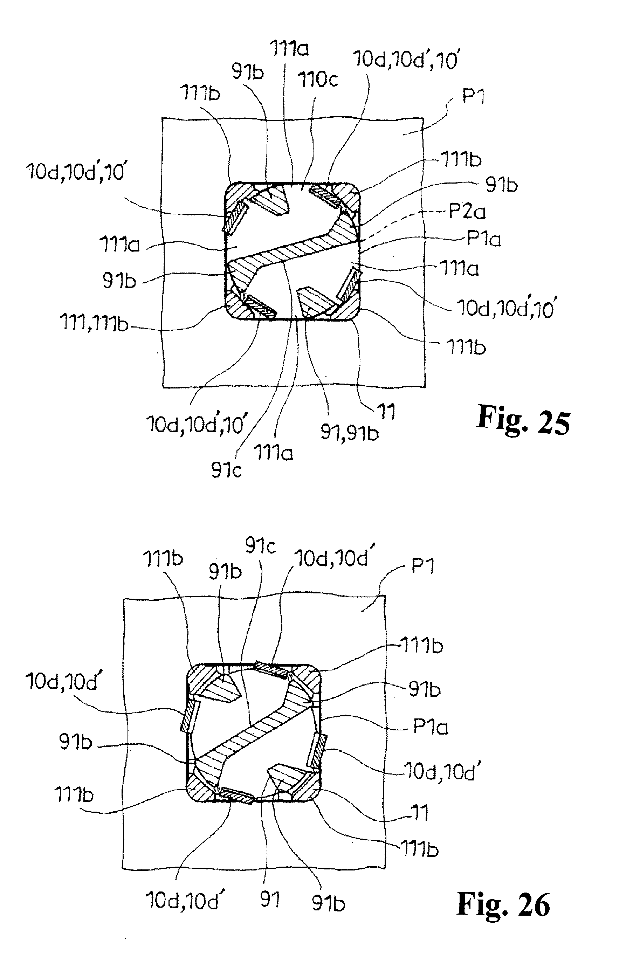

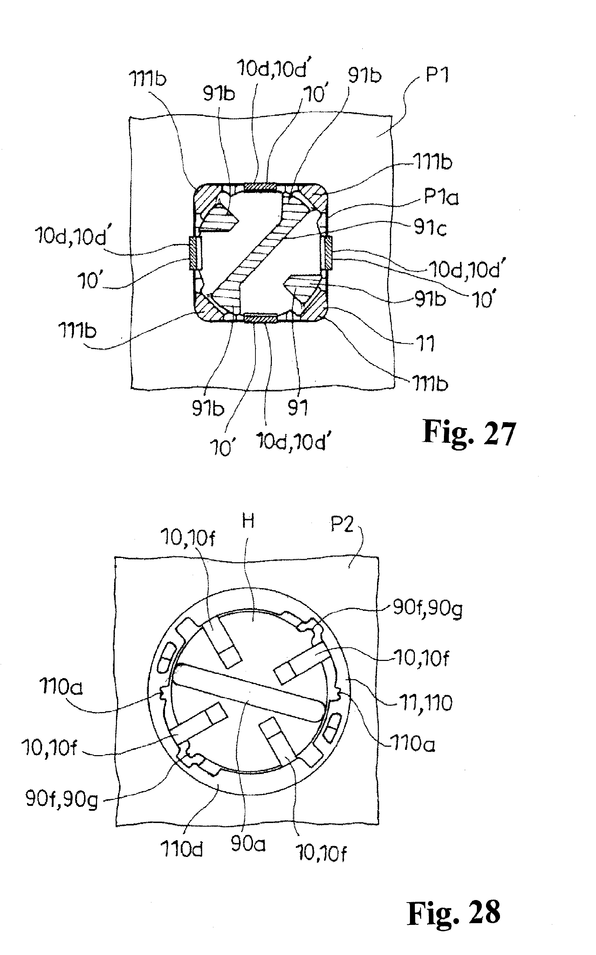

A space in a place spanning from the intermediate parts 10d' to the vertical parts 10e of two metal pieces 10 and 10 in back-to-back positions surrounding the center line, constituting the insertion part L of the clip, is formed to be somewhat smaller than the length of a diagonal line of such through-holes P1a and P2a (FIG. 25), and is formed to be larger than the space between two opposite sides of such through-holes P1a and P2a.
In this embodiment, the insertion part L of the clip is thereby insertable into the through-holes P1a and P2a only in an orientation in which a virtual line segment joining the two metal pieces 10 and 10 in back-to-back positions surrounding the center line x is arranged following the diagonal line of the through-holes P1a and P2a (FIG. 25). Also, a space in which the metal panel P1 and metal plate P2 can be sandwiched is formed between the intermediate part 10d' of each metal piece 10 and the head part H. Also, this embodiment is constituted so that by a twist operation of about 45 degrees from the state having inserted the insertion part L into the through-holes P1a and P2a, the intermediate part 10d' of each metal piece 10 catches on the sides of the through-holes P1a and P2a, removal of the insertion part L from the through-holes P1a and P2a thereby becomes impossible, and fastening of the metal panel P1 and metal plate P2 the clip is accomplished (FIG. 27).

Also, in this embodiment, when twist operation of about 45 degrees is performed after inserting the insertion part L into the through-holes P1a and P2a in the aforementioned manner, the intermediate part 10d' and vertical part 10e of the metal piece 10 is slide contacting with the hole edges or hole walls of the through-holes P1a and P2a of the metal panel P1 and metal plate P2, and the metal panel P1 and metal plate P2 are sandwiched between the intermediate part 10d' and the head part H at a position at the conclusion of the twisting (the aforementioned prescribed twist position). That is, in this embodiment, firstly, an inclined side part 10' (equivalent to the inclined side part 5c in the example illustrated in FIGS. 1 to 13), for slide contacting with the hole edges or hole walls of the through-holes P1a and P2a by a twist operation of the clip after inserting the insertion part L into the through-holes P1a and P2a, and sandwiching the metal panel P1 and metal plate P2 together with the head part H at a prescribed twist position, includes the intermediate part 10d' of such metal piece 10. Also, secondly, a press-contact side part 10" (equivalent to the press-contact side part 8 in the example illustrated in FIGS. 14 and 15), for slide contacting with the hole edges or hole walls of the through-holes P1a and P2a by a twist operation of the clip after inserting the insertion part L into the through-holes P1a and P2a, and press contacting with the hole edges or hole walls of the through-holes P1a and P2a at a prescribed twist position, includes the vertical part 10e of such metal piece 10.

With the clip according to this embodiment, the metal panel P1 and the metal plate P2 can thereby be fastened together in a state in which the two are closely affixed by the inclined side part 10' slide contacting with the hole edge or hole wall of the metal panel P1, by the twist operation after inserting the insertion part L into the non-circular through-holes P1a and P2a formed on the metal panel and metal plate P2. Also, a coating film of coating material in the places of contact with such inclined side part 10' and press-contact side part 10" on the hole edges or hole walls of the through-holes P1a and P2a of the metal panel P1 and metal plate P2 can be scraped off by the inclined side part 10' and press-contact side part 10", and the metal panel P1 and the metal piece 10 constituting the clip can be electrically connected. The metal panel P1 and metal plate P2 can thereby be connected also electrically by the fastening of the two through the clip. Particularly with the clip according to this embodiment, there is an advantage that a conductive metal constituting the clip can be limited to the metal piece 10, contributing to weight reduction and reduction of supply cost of the clip.

Also, in this embodiment, when the metal panel P1 and metal plate P2 are fastened together, the elongated part 10f contacts one face of one of these, being the metal plate P2 in the illustrated example, and is elastically deformed. In this embodiment, the inclined side part 10' is pushed against the hole edges or hole walls of the through-holes P1a and P2a after the twist operation by the operation of such elongated part 10f, so that the metal panel P1 and metal plate P2 are fastened together without rattling. Also, in the case when coating is applied in places around the through-holes P1a and P2a of metal plate P2, a coating film from this coating can be scraped off in the process of the twist operation by this elongated part 10f, and the metal panel P1 and metal plate P2 can be electrically connected by the clip through these places.

Meanwhile, the grommet body 11 includes a head part 110, and a fitting part 111 to be fitted to be non-rotatable in the non-circular through-holes P1a and P2a formed on the metal panel P1 and metal plate P2. Also, the clip is combined with the grommet body 11, receiving the insertion part L on the inside of the fitting part 111 of the grommet body 11 in a manner so that the head part H of the clip is overlaid on the head part 110 of the grommet body 11. Also, an open part 111a, for allowing the inclined side part 10' and press-contact side part 10" of the clip to face outward in the prescribed twist position of the clip, is formed on the fitting part 111 of the grommet body 11. In addition, a latch-receiving part 110a, with which a latch part 90f formed on the head part H of the clip is latched in the prescribed twist position, is formed on the head part 110 of the grommet body 11.

In the illustrated example, the head part 110 of the grommet body 11 includes a center part 110b having a roughly circular through-hole 110c for inserting the insertion part L of the clip, a ring-form outer flange part 110d, and a linking piece 110e connecting the two. The inner diameter of the outer flange part 110d is formed about equal to the outer diameter of the head part H of the clip. The upper faces of the center part 110b and linking piece 110e are positioned downward from the upper face of the outer flange part 110d by an amount of the thickness dimension of the head part H of the clip, so that the edge part 90e of the head part H of the clip faces opposite to the inner wall of the outer flange part 110d in a state in which the insertion part L is inserted into the through-hole 110c and the head part H of the clip is overlaid on the head part 110 of the grommet body 11. Linking pieces 110e are provided in four places with about equal spacing between adjacent linking pieces 110e in a direction going around the center part 110b, with inside ends connected to the center part 110b and outside ends connected to the outer flange part 110d. The elongated parts 10f of the four metal pieces 10, 10, ... constituting the clip are respectively received between adjacent linking pieces 110e in a state in which the clip is assembled in the aforementioned manner on the grommet body 11.

Also, in the illustrated example, the fitting part 111 of the grommet body 11 includes four leg pieces 111b, 111b, ... projecting from the lower face of the center part 110b in a direction orthogonal to this lower face. Each leg pieces 111b is provided with about equal spacing between adjacent leg pieces 111b in a direction going around the center part 110b. The insertion part L of the clip, inserted into the through-hole 110c in the aforementioned manner, is positioned inside a space surrounded by the four leg pieces 111b, 111b, .... Also, the space between adjacent leg pieces 111b functions as the aforementioned open part 111a. Also, in the illustrated example, the fitting part 111 of the grommet body 11 is fitted into the through-holes P1a and P2a formed on the metal panel P1 and P2, with each leg pieces 111b respectively being positioned in the corners of the roughly square through-holes P1a and P2a. The size between the outer faces of leg parts 91b and 91b in opposite positions surrounding the center of the through-hole 110c are formed about equal to the length of a diagonal line on the roughly square through-holes P1a and P2a, so that the fitting part 111 of the grommet body 11 is thereby fitted to be non-rotatable in the through-holes P1a and P2a (FIG. 25).

In the state before the twist operation, the metal pieces 10 of the clip are respectively positioned on the inside of the leg parts 91b of the grommet body 11 (FIG. 25). When the clip is twist-operated from this state up to the prescribed twist position, the inclined side parts 10' and press-contact side parts 10" of the metal pieces 10 contact the through-holes P1a and P2a through the open part 111a (FIG. 27). In the illustrated example, the leg parts 91b constituting the shaft portion 91 of the clip body 9 respectively enter to the inside of the leg parts 91b of the grommet body 11 in this prescribed position (FIG. 27).

In the illustrated example, the latch part 90f includes a projection 90g projecting outward from the edge part 90e of the head part H of the clip, that is, the edge part 90e of the head part-constituting portion 90. Latch parts 90f are respectively provided in positions on two sides in the diameter direction of the clip. Also, in the illustrated example, the latch-receiving part 110a includes a recess 110f provided on the inner wall of the outer flange part 110d. Latch-receiving parts 110a are respectively provided in positions on two sides in the diameter direction of the outer flange part 110d. The latch part 90f of the clip is positioned on the near side of the latch-receiving part 110a in the position before the twist operation (FIG. 28), and an inclined part 110g narrowing the inner diameter of the outer flange part 110d while approaching the latch-receiving part 110a is formed on the inner wall of the outer flange part 110d between the latch part 90f and latch-receiving part 110a in this position. When the clip is twist-operated toward the prescribed twist position, the projection 90g constituting the latch part 90f contacts the inclined part 110g, so that mainly the side of the outer flange part 110d is elastically deformed, and the twist operation to the prescribed twist position of the clip is allowed. When the clip reaches the prescribed twist operation, the projection 90g constituting the latch part 90f enters into the recess 110f constituting the latch-receiving part 110a, and the latch part 90f is latched to the latch-receiving part 110a by elastic return of the side of the outer flange part 110d. In the illustrated example, the state in which the clip is in the prescribed twist position can thereby be maintained stably by the grommet body 11.

In the illustrated example, a small projection 110h projecting outward is provided inside the recess 110f constituting the latch-receiving part 110a, so that the tip of this small projection 110h contacts the tip of the projection 90g in a state in which the side of the outer flange part 110d is somewhat elastically deformed when in the state in which the projection 90a constituting the latch part 90f is inserted inside this recess 110f.

### (Other)

In the illustrated example, the through-holes P1a and P2a were formed as roughly square holes, but the through-holes P1a and P2a may be elliptical or polygonal holes other than square provided that they are non-circular holes. The sectional shape in the direction orthogonal to the direction of insertion of the insertion part L is selected in accordance with the hole shape of such non-circular through-holes P1a and P2a, so as to have an insertable orientation and a non-insertable orientation into such non-circular through-holes P1a and P2a.
The entire contents of the specification, claims, drawings, and abstract of Japanese Patent Application No. 2009-153462 filed on June 29, 2009 are incorporated by reference herein as a disclosure of the specification of the present invention.

## Claims

1. A clip for fastening together and electrically connecting a coated metal panel and a metal plate, or a coated metal panel and a coated metal plate, comprising:
a head part, and an insertion part for non-circular through-holes formed in said metal panel and said metal plate;
wherein the insertion part includes an insertable orientation and a non-insertable orientation into said through-holes; and
an inclined side part adapted to sandwich the metal panel and the metal plate together with the head part at a prescribed twist position while slide-contacting with a hole edge or a hole wall of said through-hole by a twist operation after insertion into said through-hole.

2. A clip according to claim 1, wherein an elastic piece adapted to elastically deform when the metal panel and the metal plate are fastened together, is provided on the head part for contacting with one face of either one of the metal panel or the metal plate.

3. A clip according to claim 1 or 2, wherein the inclined side part is formed to point contact with the hole edge or the hole wall of the through-hole of the metal panel.

4. A clip for fastening together and electrically connecting a coated metal panel and a metal plate, or a coated metal panel and a coated metal plate, comprising:
a head part, and an insertion part for non-circular through-holes formed on said metal panel and said metal plate;
wherein the insertion part includes an insertable orientation and a non-insertable orientation into said through-holes; and
a press-contact side part adapted to press contact with a hole edge or a hole wall of the through-hole at a prescribed twist position while slide-contacting with the hole edge or the hole wall of said through-hole by a twist operation after insertion into said through-hole.

5. A clip according to claim 1, further comprising:
a clip body made with synthetic resin, and including a head part-constituting portion constituting the head part and a shaft portion constituting the insertion part; and
a metal piece constituting said insertion part having a lower end part of the piece supported on a tip side of the shaft portion of the clip body and an upper end part of the piece supported on the head part of the clip body;
wherein the inclined side part is formed by an intermediate part of the metal piece.

6. A clip according to claim 4, further comprising:
a clip body made with synthetic resin, and including a head part-constituting portion constituting the head part and a shaft portion constituting the insertion part; and
a metal piece constituting said insertion part having a lower end part of the piece supported on a tip side of the shaft portion of the clip body and an upper end part of the piece supported on the head part of the clip body;
wherein the press-contact side part is formed by an intermediate part of the metal piece.

7. A clip according to claim 5 or 6, wherein an elongated part is provided on the upper end part of the metal piece for contacting with one face of either one of the metal panel or the metal plate and adapted to elastically deform when the metal panel and the metal plate are fastened together.

8. A clip device, comprising:
the clip according to any of claims 1 to 7; and
a grommet body including a head part, and a fitting part adapted to be fitted non-rotatably in the non-circular through-holes formed in the metal panel and the metal plate;
wherein the clip is combined with the grommet body such that the insertion part is received in an inside of the fitting part of the grommet body in a manner so that the head part of the clip is overlaid on the head part of the grommet body;
an open part is formed on the fitting part of the grommet body to face outward an inclined side part or a press-contact side part of the clip in a prescribed twist position of the clip; and
a latch-receiving part is formed on the head part of the grommet body to be latched with a latch part formed on the head part of the clip in the prescribed twist position.
